Europäisches Patentamt

European Patent Office

Office européen des brevets

(19)

(11) Publication number: **0 303 344 B1**

# EUROPEAN PATENT SPECIFICATION

(12)

(45) Date of publication of patent specification :
17.07.91 Bulletin 91/29

(51) Int. Cl.⁵ : **F02M 69/00, F02M 55/02**

(21) Application number : **88305880.2**

(22) Date of filing : **28.06.88**

(54) **Fuel injection apparatus.**

(30) Priority : **03.08.87 US 80831**

(43) Date of publication of application :
**15.02.89 Bulletin 89/07**

(45) Publication of the grant of the patent :
**17.07.91 Bulletin 91/29**

(84) Designated Contracting States :
**AT DE FR GB IT**

(56) References cited :
EP-A- 0 238 156
EP-A- 0 249 313
DE-A- 3 316 979
DE-A- 3 320 469
FR-A- 2 551 835
US-A- 3 227 147

(73) Proprietor : **GENERAL MOTORS CORPORATION**
**General Motors Building 3044 West Grand Boulevard**
**Detroit Michigan 48202 (US)**

(72) Inventor : **Field, Martin John**
**11 Dawn Valley Drive**
**Rochester New York 14623 (US)**
Inventor : **Calhoun, Jeffrey Skyles**
**78 Washington Street**
**Everett Pennsylvania 15537 (US)**

(74) Representative : **Denton, Michael John et al**
**Patent Section Vauxhall Motors Limited 1st Floor Gideon House 26 Chapel Street**
**Luton Bedfordshire LU1 2SE (GB)**

EP 0 303 344 B1

## Description

This invention relates to a fuel injection apparatus for a multi-cylinder internal combustion engine in which a plurality of injection nozzles discharge fuel adjacent the engine inlet ports and a single fuel injector meters the fuel to all of the injection nozzles.

The fuel injection apparatus disclosed in our published European patent application No.0 249 313 includes a single, or central, fuel injector that meters fuel to a plurality of injection nozzles.

Each of the injection nozzles is connected to the central fuel injector through a slim injection tube. This invention provides a structure which assures that the injection tubes may be readily connected to and retained by the central fuel injector.

DE-A-3,320,469 discloses fuel injection apparatus in which injection tubes are secured in the base of the apparatus, each tube being surrounded by an O-ring and a sleeve. US-A-3,227,147 discloses an alternative arrangement in which the injection tube has a flared end. Neither of these arrangements lend themselves to easy assembly.

Fuel injection apparatus in accordance with the present injection is characterised over DE-A-3,320,469 by the features specified in the characterising portion of claim 1.

In a structure according to this invention, the base of the central fuel injector has a plurality of radially opening recesses that receive the ends of the injection tubes, the end of each injection tube is flared and surrounded by an O-ring that seals the injection tube in its recess, each injection tube is surrounded by a plastic sleeve that supports the injection tube in its recess, and a retainer clip is secured to the bottom of the base and has spring fingers that embrace the injection tubes and bias the plastic sleeves to retain the ends of the injection tubes in their recesses.

The present invention will now be described, by way of example, with reference to the accompanying drawings, in which :

Figure 1 is a partial sectional view of a fuel injection apparatus incorporating a first embodiment of this invention and showing the engagement of the retainer clip with the plastic sleeves of the injection tubes ;

Figure 2 is a sectional view through the lower portion of the fuel injection apparatus of Figure 1, taken along line 2-2 of Figure 1, further showing the engagement of the retainer clip with the plastic sleeves. In Figure 2, the line 1A-1A is the section line for the Figure 1 view of the cylindrical base, and the line 1B-1B is the section line for the Figure 1 view of the air inlet adapter.

Figure 3 is a view of a portion of a fuel injection apparatus incorporating a second embodiment of this invention and showing the engagement of the retainer clip with the plastic sleeves of the injection tubes ; and

Figure 4 is an isometric view of the retainer clip employed in the Figure 3 embodiment, showing the details of its construction.

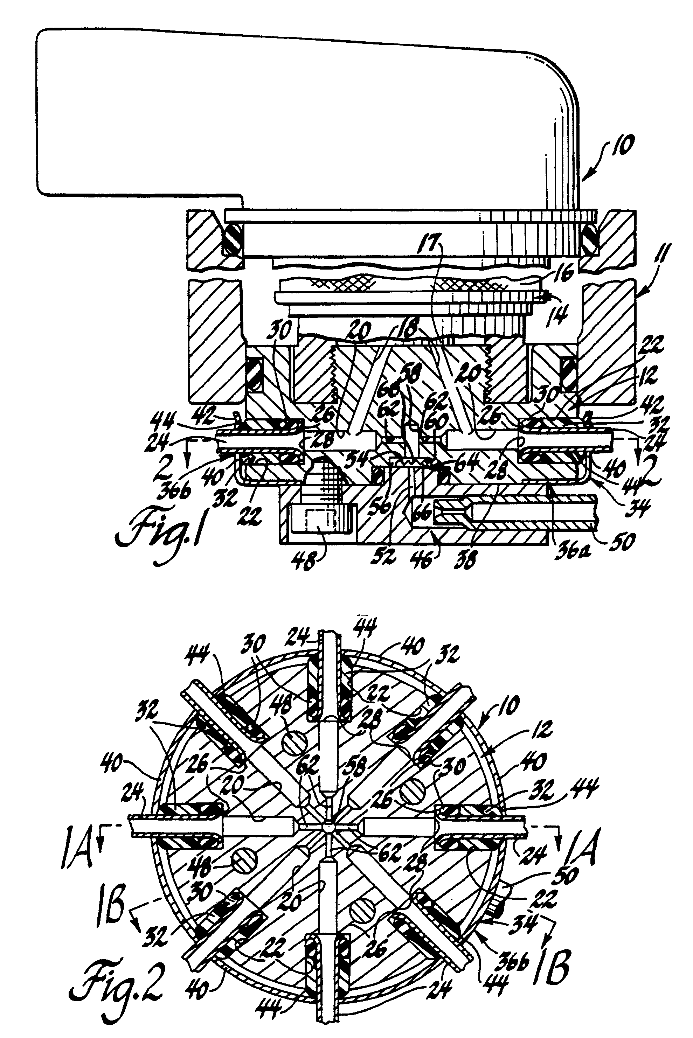

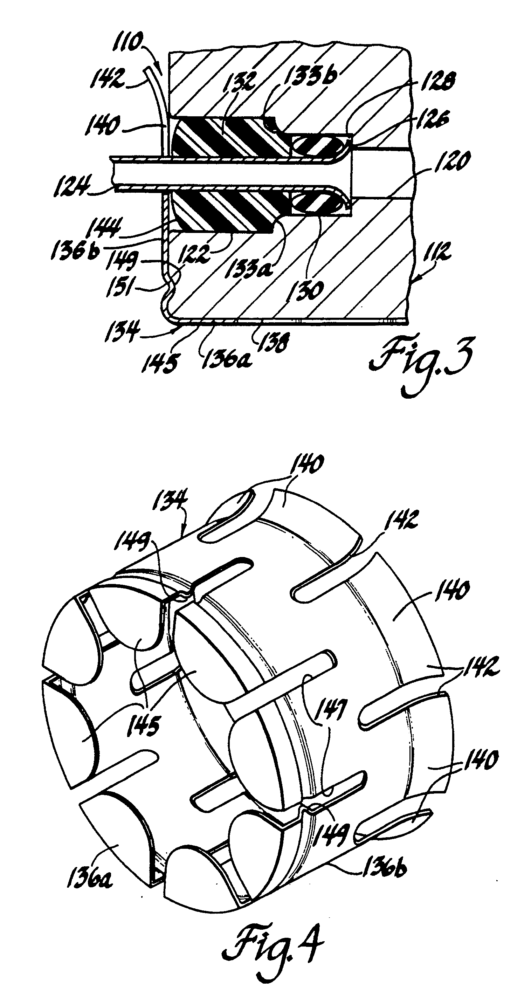

Referring first to Figures 1 and 2, a fuel injection apparatus 10 is received in a body 11 and has a cylindrical base 12 that is threaded into an upper portion 14. Upper portion 14 has a cylindrical filter element 16 surrounding a fuel inlet region, and a solenoid operated valve element 17 that overlies a plurality of fuel discharge passages 18 formed in cylindrical base 12. Each fuel discharge passage 18 extends through a (radially directed) feed passage 20 to a (radially opening) recess 22 that receives an injection tube 24.

The end 26 of each injection tube 24 is flared and received against a stepped shoulder 28 at the intersection of its recess 22 and its feed passage 20. Each injection tube 24 is surrounded by an O-ring 30 that seals the injection tube 24 in its recess 22. Each injection tube 24 is further surrounded by a plastic sleeve 32 that supports the injection tube 24 in its recess 22.

A retainer clip 34 has a base portion 36a that underlies the bottom 38 of cylindrical base 12, and a cylindrical portion 36b divided into spring fingers 40 that embrace injection tubes 24. As retainer clip 34 is placed onto cylindrical base 12, the curled upper (free) end 42 of each spring finger 40 flexes outwardly to lead over the rounded ends 44 of plastic sleeves 32. The spring fingers 40 then bias plastic sleeves 32, and hence injection tubes 24 to retain the ends 26 of injection tubes 24 in their recesses 22, while the rounded ends 44 of plastic sleeves 32 assist in holding retainer clip 34 on cylindrical base 12. This structure thereby assures that injection tubes 24 may be readily connected to and retained by the fuel injection apparatus 10.

An air inlet adapter 46 is secured by bolts 48 to the bottom 38 of cylindrical base 12 and also assists in holding retainer clip 34 on cylindrical base 12. Air inlet adapter 46 has an inlet tube 50 that leads clean air to an air inlet passage 52. Air inlet passage 52 opens through the bottom wall 54 of a rectifier valve chamber 56 defined between cylindrical base 12 and air inlet adapter 46. An air outlet passage 58 opens through the top wall 60 of rectifier valve chamber 56 and extends to a plurality of air discharge passages 62, each opening radially into one of the feed passages 20.

A rectifier valve disc 64 is enclosed in rectifier valve chamber 56 and has a flat valving surface 66 adjacent air inlet passage 52 and an irregular surface 68 adjacent air outlet passage 58. When solenoid[f] operated valve element 17 is opened to meter fuel through fuel discharge passages 18, the pressure in feed passages 20 and air discharge and outlet passages 62 and 58 increases to engage the flat valving surface 66 of rectifier valve disc 64 against the bottom wall 54 of rectifier valve chamber 56 about air inlet passage 52, thereby sealing air inlet passage 52. When solenoid operated valve element 17 is closed, the reduced pressure in feed passages 20 and air discharge and outlet passages 62 and 58 lifts the rectifier valve disc 64 ; the irregular surface 68 of rectifier valve disc 64 engages the top wall 60 about air outlet passage 58 and allows air to flow through air inlet passage 52, rectifier valve chamber 56, air outlet passage 58 and air discharge passages 62 to discharge feed passages 20.

Further details of the construction and operation of fuel injection apparatus 10 are set forth in our above mentioned patent application and other such details are set forth in US patent No. 4572436. Those details will not be repeated here.

Referring now to Figures 3 and 4, a fuel injection apparatus 110 has a cylindrical base 112 with a plurality of (radially directed) feed passages 120 extending to (radially opening) recesses 122 that receive injection tubes 124.

The end 126 of each injection tube 124 is flared and received against a shoulder 128 at the intersection of its recess 122 and its feed passage 120, each injection tube 124 is surrounded by an O-ring 130 that seals the injection tube 124 in its recess 122, and each injection tube 124 is further surrounded by a plastic sleeve 132 that supports the injection tube 124 in its recess 122. In this embodiment, each plastic sleeve 132 has a shoulder 133a that engages a complementary shoulder 133b in its recess 122.

A retainer clip 134 has a base portion 136a that underlies the bottom 138 of injector base 112, and a cylindrical portion 136b divided into spring fingers 140 that embrace injection tubes 124. As retainer clip 134 is placed onto cylindrical base 112, the curled upper end 142 of each spring finger 140 flexes outwardly to lead over the rounded ends 144 of plastic sleeves 132. The spring fingers 140 then bias plastic sleeves 132 to retain the ends 126 of injection tubes 124 in their recesses 122.

Base portion 136a and the lower end of cylindrical portion 136b are divided into flexible tabs 145 by slits 147. Each flexible tab 145 has an inwardly directed ridge 149 that engages in a groove 151 circumferentially surrounding cylindrical base 112, thereby securing retainer clip 134 to cylindrical base 112. This structure thereby assures that injection tubes 124 may be readily connected to and retained by fuel injection apparatus 110.

## Claims

1. A fuel injection apparatus (10, 110) having a plurality of recesses (22, 122) in its base (12, 112) each receiving the end of an injection tube (24, 124); an O-ring (30, 130) surrounding each injection tube (24, 124) to seal the injection tube (24, 124) in its recess (22, 122) ; and a sleeve (32, 132) surrounding each injection tube (24, 124) to support the injection tube (24, 124) in its recess (22, 122) ; characterised in that the recesses (22, 122) are radially directed ; the end (26, 126) of each injection tube (24, 124) is flared ; and a retainer clip (34, 134) is secured to the base (12, 112) and has spring fingers (40, 140) that embrace the injection tubes (24, 124) and bias the sleeves (32, 132) to retain the ends of the injection tubes (24, 124) in their recesses (22, 122).

2. A fuel injection apparatus (10, 110) as claimed in claim 1, having a plurality of radially directed feed passages (20, 120) that open to the recesses (22, 122), wherein the end (26, 126) of each injection tube (24, 124) engages a shoulder (28, 128) at the intersection of its recess (22, 122) and its feed passage (20, 120).

3. A fuel injection apparatus (10, 110) as claimed in claim 1 or claim 2, wherein the free ends (42, 142) of the spring fingers (40, 140) are curled to lead over the ends (44, 144) of the sleeves (32, 132), and the ends (44, 144) of the sleeves (32, 132) are rounded to assist in holding the retainer clip (34, 134) on the base (12, 112).

4. A fuel injection apparatus (10, 110) as claimed in any one of claims 1 to 3, wherein the retainer clip (34, 134) comprises a base portion (36a, 136a) and a cylindrical portion (36b, 136b), the spring fingers (40, 140) extending from the cylindrical portion (36b, 136b), and the base portion (36a, 136a) engaging the base (12, 112).

5. A fuel injection apparatus (110) as claimed in claim 4 wherein the base portion (136a) is divided into flexible tabs (145) by slits (147), and the cylindrical portion (136b) has an inwardly directed ridge (149) for engaging a corresponding groove (151) in the base (112).

## Ansprüche

1. Brennstoff-Einspritzvorrichtung (10, 110) mit einer Vielzahl von Vertiefungen (22, 122) in ihrer Basis (12, 112), von denen jede das Ende eines Einspritzrohrs (24, 124) aufnimmt ; wobei jedes Einspritzrohr (24, 124) von einem O-Ring (30, 130) umgeben ist zum Abdichten des Einspritzrohrs (24, 124) in seiner Vertiefung (22, 122) ; und jedes Einspritzrohr (24, 124) von einer Hülse (32, 132) umgeben ist, um das Einspritzrohr (24, 124) in seiner Vertiefung (22, 122) abzustützen ; dadurch gekennzeichnet, daß die Vertiefungen (22, 122) radial gerichtet sind ; daß das Ende (26, 126) jedes Einspritzrohrs (24, 124) trichterförmig erweitert ist ; und daß eine Haltespange (34, 134) an der Basis (12, 112) befestigt ist und Federfinger (40, 140) besitzt, welche die Einspritzrohre (24, 124) umfassen und die Hülsen (32, 132) unter Vorspannung setzen, um die Enden der Einspritzrohre (24, 124) in ihren Vertiefungen (22, 122) zurückzuhalten.

2. Brennstoff-Einspritzvorrichtung (10, 110) nach Anspruch 1 mit einer Vielzahl von radial gerichteten Speisedurchlässen (20, 120), welche in die Vertiefungen (22, 122) münden, wobei das Ende (26, 126) jedes Einspritzrohrs (24, 124) an einer Schulter (28, 128) an der Überschneidung seiner Vertiefung (22, 122) mit seinem Speisedurchlaß (20, 120) anliegt.

3. Brennstoff-Einspritzvorrichtung (10, 110) nach Anspruch 1 oder 2, bei der die freien Enden (42, 142) der Federfinger (40, 140) gebördelt sind, um über die Enden (44, 144) der Hülsen (32, 132) zu reichen, und die Enden (44, 144) der Hülsen (32, 132) abgerundet sind, um die Haltespange (34, 134) an der Basis (12, 112) halten zu helfen.

4. Brennstoff-Einspritzvorrichtung (10, 110) nach einem der Ansprüche 1 bis 3, bei der die Haltespange (34, 134) einen Basisabschnitt (36a, 136a) und einen zylindrischen Abschnitt (36b, 136b) umfaßt, die Federfinger (40, 140) von dem zylindrischen Abschnitt (36b, 136b) abstehen und der Basisabschnitt (36a, 136a) an der Basis (12, 112) anliegt.

5. Brennstoff-Einspritzvorrichtung (110) nach Anspruch 4, bei der der Basisabschnitt (136a) durch Schlitze (147) in flexible Fahnen (145) unterteilt ist und der zylindrische Abschnitt (136b) eine nach innen gerichtete Rippe (149) zum Eingriff in eine entsprechende Nut (151) in der Basis (112) besitzt.

## Revendications

1. Appareil d'injection de combustible (10, 110) comportant plusieurs cavités (22, 122) dans sa base (12, 112), recevant chacune l'extrémité d'un tube d'injection (24, 124) ; une bague torique (30, 130) entourant chaque tube d'injection (24, 124) pour assurer l'étanchéité de ce tube (24, 124) dans sa cavité (22, 122) ; et un manchon (32, 132) entourant chaque tube d'injection (24, 124) pour soutenir ce dernier dans sa cavité (22, 122) ; caractérisé en ce que les cavités (22, 122) sont orientées radialement ; l'extrémité (26, 126) de chaque tube d'injection (24, 124) est évasée ; et une pince de retenue (34, 134) est fixée sur la base (12, 112) et comporte des doigts élastiques (40, 140) qui enserrent les tubes d'injection (24, 124) et sollicitent les manchons (32, 132) afin de retenir les extrémités desdits tubes (24, 124) dans leurs cavités (22, 122).

2. Appareil d'injection de combustible (10, 110) suivant la revendication 1, comportant plusieurs conduits d'alimentation (20, 120) orientés radialement qui débouchent dans les cavités (22, 122), dans lequel l'extrémité (26, 126) de chaque tube d'injection (24, 124) est en contract avec un épaulement (28, 128) à l'intersection de sa cavité (22, 122) et de son conduit d'alimentation (20, 120) ;

3. Appareil d'injection de combustible (10, 110) suivant la revendication 1 ou 2, dans lequel les extrémités libres (42, 142) des doigts élastiques(40, 140) sont incurvées pour franchir les extrémités (44, 144) des manchons(32, 132) et les extrémités (44, 144) de ces manchons sont arrondies pour aider à maintenir la pince de retenue (34, 134) sur la base (12, 112).

4. Appareil d'injection de combustible (10, 110) suivant l'une quelconque des revendications 1 à 3, dans lequel la pince de retenue (34, 134) comprend une portion inférieure (36a, 136a) et une portion cylindrique (36b, 136b), les doigts élastiques (40, 140) s'étendant depuis la portion cylindrique (36b, 136b), et la portion inférieure (36a, 136a) étant en prise avec la base (12, 112).

5. Appareil d'injection de combustible (110) suivant la revendication 4, dans lequel la portion inférieure (136a) est divisée en languettes flexibles (145) par des fentes (146), la portion cylindrique (136b) comportant une nervure (149) orientée vers l'intérieur pour coopérer avec une gorge correspondante (151) prévue dans la base (112).

Fig.1

Fig.2

Fig.3

Fig.4